Europäisches Patentamt

European Patent Office

Office européen des brevets

(11) Veröffentlichungsnummer: **0 209 514 B1**

# EUROPÄISCHE PATENTSCHRIFT

(45) Veröffentlichungstag der Patentschrift: **27.02.91**

(51) Int. Cl.5: **G01D 5/34**

(21) Anmeldenummer: **86890191.9**

(22) Anmeldetag: **26.06.86**

(54) **Messsystem, insbesondere inkrementales Messsystem für die Messung von Längen und Winkeln auf optoelektronischem Wege.**

(30) Priorität: **10.07.85 AT 2036/85**

(43) Veröffentlichungstag der Anmeldung:
**21.01.87 Patentblatt 87/04**

(45) Bekanntmachung des Hinweises auf die
Patenterteilung:
**27.02.91 Patentblatt 91/09**

(84) Benannte Vertragsstaaten:
**BE CH DE FR GB IT LI LU NL SE**

(56) Entgegenhaltungen:
**EP-A- 0 076 858**
**GB-A- 1 221 974**

**PATENT ABSTRACTS OF JAPAN, Band 8, Nr.
33 (P-254)[1470], 14. Februar 1984; & JP-A-58
187 810 (FUJITSU FANUC K.K.) 02-11-1983**

**PATENT ABSTRACTS OF JAPAN, Band 9, Nr.
227 (P-388)[1950], 13. September 1985; & JP-
A-60 85 317 (MITSUBISHI DENKI K.K.)
14-05-1985**

**PATENT ABSTRACTS OF JAPAN, Band 9, Nr.
163 (P-371)[1886], 9. Juli 1985; & JP-A-60 39
507 (TOSHIBA K.K.) 01-03-1985**

(73) Patentinhaber: **RSF-Elektronik Gesellschaft
m.b.H.**

**A-5121 Tarsdorf 93(AT)**

(72) Erfinder: **Rieder, Heinz**
**Riedersabach 90**
**A-5120 St. Pantaleon(AT)**
Erfinder: **Schwaiger, Max**

**A-5120 Ostermiething 298(AT)**

(74) Vertreter: **Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz(AT)**

**Beschreibung**

Die Erfindung betrifft ein Meßsystem nach dem einleitenden Teil des Patentanspruches 1.

Ein derartiges Meßsystem ist dem Prinzip nach aus der EP-A -0076 858 bekanntgeworden. Dieses bekannte Meßsystem dient ausschließlich zur Erfassung von Drehverstellungen und zur Winkelmessung. Als Maßstab dient eine eine grobe Inkrementalteilung bildende Schlitzplatte, die mit dem drehenden Teil antriebsverbunden ist und die im Durchlichtverfahren von zwei Lichtquellen her an zwei im Abstand voneinander liegenden Punkten durch je eine Faseroptik mit kreisförmigem Querschnitt beleuchtet wird. An der Rückseite der Platte sind gegenüber den beleuchteten Stellen gegeneinander versetzte Abtastgitter angeordnet, von denen je zwei benachbarte Gitter von einer Lichtquelle ausgeleuchtet werden. Anschließende Fiberoptiken leiten das empfangene Licht zu Empfängern, die es in zwei gegeneinander phasenverschobene elektrische Signale umwandeln. Empfänger und Lichtquellen können mit Abstand vom Abtastbereich geschützt untergebracht werden.

Aus der CH-A-646 784 ist ein inkrementales Längenmeßsystem bekannt, bei dem ein grober Inkrementalmaßstab im Durchlichtverfahren an zwei im Abstand voneinander angeordneten Stellen mit an je eine Faseroptik angeschlossenen Sammellinsen beleuchtet wird und Empfänger vorgesehen sind, die durch ein Abtastgitter hindurch, das gegenüber dem Maßstab bei der Abtastung verstellt wird, beleuchtet werden, das empfangene Licht sammeln und über Fiberoptiken zu Empfängern leiten, die der Beleuchtungsstärke entsprechende elektrische Signale erzeugen, welche der weiteren Auswertung zuführbar sind. Nach einer Variante wird durch den Maßstab hindurch ein reflektierendes Abtastgitter beleuchtet, das gemeinsam mit den Enden der Faseroptiken relativ zum Maßstab verstellbar ist und es sind an den anderen Enden der Faseroptiken Leiteinrichtungen, insbesondere halbdurchlässige Spiegel vorgesehen, die es ermöglichen, die gleichen Faseroptiken zur Einleitung des Lichtes und zur Zuführung des reflektierten, and den schräg stehenden Spiegeln umgeleiteten Lichtes zu Emfpängern zu verwenden.

Bei beiden bekannten Meßsystem werden ungerichtete Faseroptiken eingesetzt und die an den elektrischen Empfängern auftretenden Signale entsprechen der mittleren Beleuchtungsstärke des Empfangsbereiches dieser Optiken. Die Systeme sind daher nur für die Abtastung grober Inkrementalteilungen geeignet. Die zum Maßstab gerichteten Projektionsoptiken, die Sammeloptiken und die notwendigen Abtastgitter, die im Abstand vom Maßstab anzubringen sind, bedingen eine relativ große Baugröße der Abtasteinheit und einen aufwendigen Aufbau. Der Gesamtaufbau richtet sich ferner genau nach dem jeweils verwendeten Meßsystem.

Für hochgenaue Messungen mit eine feine Teilung aufweisenden inkrementalen Maßstäben und für Messungen mit codierten Maßstäben, meist mehrspurigen Absolutmaßstäben, bei denen gegebenenfalls die feinste Teilungsspur eine Inkrementalspur ist, werden bisher grundsätzlich Abtasteinheiten verwendet, bei denen die optoelektronischen Empfänger in unmittelbarer Nähe des Maßstabes auf der relativ zum Maßstab verstellbaren Ableseeinheit angeordnet sind. Bei codierten Maßstäben werden der Hell-Dunkelverteilung der Codespuren am Ablesepunkt entsprechende codierte Signale erzeugt und bei der Messung ausgewertet, etwa für die Anzeige der gemessenen Länge oder des gemessenen Winkels ausgenützt. Bei Inkrementalmaßstäben sind Zählschaltungen vorgesehen, welche die Anzahl der von einem am Maßstab festgelegten oder gewählten Bezugspunkt aus zurückgelegten Inkremente verstellrichtungsabhängig zählen und das jeweilige Meßergebnis liefern. Dabei erfolgt meist eine Ablesung des aus Hell-Dunkelfeldern bestehenden Inkrementalmaßstabes durch selbst aus Hell-Dunkelfeldern bestehende, um Teilungsbruchteile versetzte Gitter, so daß bei der Verstellung einer Sinusfunktion folgende Helligkeits- und damit Signalschwankungen auftreten, wobei die Wellenlänge der erzeugten Signale der Maßstabteilung entspricht. Die Nulldurchgänge dieser Signale können auscodiert und gezählt werden. Es gibt auch Vervielfacherschaltungen, meist Potentiometerschaltungen, zur zusätzlich elektronischen Unterteilung des Maßstabes. Nach einer anderen Möglichkeit werden die erzeugten Meßsignale einem Interpolationsrechner zugeführt, um eine noch feinere Unterteilung des durch die Inkremente festgelegten Maßstabes zu erzielen. Entsprechende Auswertungsschaltungen sind Allgemeingut der Technik. Solche Schaltungen sind bisher nur bei Meßsystemen üblich bzw. möglich, bei denen die elektronischen Empfänger und die zugeordneten Abtastgitter nahe am Maßstab angeordnet sind. Lediglich bei dieser Ausführung werden eindeutig auswertbare Signale erhalten, wenn die Grundteilung des Inkrementalmaßstabes fein ist, also in der Größenordnung von Zehntel- oder Hundertstelmillimetern liegt. Die optoelektronischen Empfänger können aus Photodioden oder Phototransistoren bestehen. Neben einer direkten Beleuchtung des Maßstabes die entweder über Photodioden für jedes Abtastelement gesondert oder von gemeinsamen Beleuchtungseinrichtungen aus erfolgen kann, wobei eine Beleuchtung im Durchlicht-, Auflicht- oder Reflexionsverfahren je nach Lage der Beleuchtungseinrichtung zum Maßstab und nach der optischen Durchlässigkeit des Maßstabes möglich ist, wurden für die Beleuchtung auch schon Konstruktionen vorgeschlagen, bei denen eine gemeinsame Lichtquelle die verschiedenen zu beleuchtenden Maßstabstellen über eine ungerichtete Glasfaseroptik beleuchtet. Dies ermöglicht eine größere Freizügigkeit der Anbringung der Lichtquelle innerhalb der Abtasteinheit und bei benötigten höheren Beleuchtungsstärken auch eine Verringerung der Wärmebelastung des Maßstabes, weil die von der Beleuchtungseinrichtung abgegebene Wärme abgeleitet werden kann.

Aus der CH-A-457 879 ist es bekannt, einen Maßstab der als Linearmaßstab oder als Scheibe ausgebildet sein kann, aus den Enden der einzelnen Elemente einer gerichteten, für die Ubertragung eindimensionaler Bilder geeigneten Fiberoptik aufzubauen, wobei die Elemente der Fiberoptik mit den vom Maßstab abweisenden Enden zu einer gemeinsamen Beleuchtungseinrichtung gerichtet sind. Durch Abtastung der beleuchteten, am Maßstab liegenden Enden der Fiberoptik über relativ zum Maßstab verstellbare Abtasthilfen, z. B. drehende Spiegel bei Maßstabscheiben, und Aufnahme der empfangenen Lichtsignale über optoelektronische Empfänger werden digitale Meßsignale entsprechend dem bei der Maßstababtastung zurückgelegten Weg erhalten.

Aufgabe der Erfindung ist die Schaffung eines Meßsystemes der eingangs genannten Art, das es mit einfachen Mitteln ermöglicht, Glasfaseroptiken auch bei hochgenauen bzw. eine feine Teilung aufweisenden Inkrementalmeßsystemen sowie bei codierten Meßsystemen einzusetzen und dadurch die mit dem Maßstab zusammenwirkenden Teile der Beleuchtungs- und Abtasteinrichtung zu vereinfachen, kleiner als bisher und robust und störungsunempfindlich auszuführen. Trotzdem soll eine genaue Ablesung des Maßstabes ermöglicht werden.

Die gestellte Aufgabe wird durch die im kennzeichnenden Teil des Anspruches 1 angegebenen Merkmale gelöst.

Bei den vorgesehenen, gerichteten Fiberoptiken erfolgt eine Bildübertragung. Die notwendigen Ablesehilfen, bei Inkrementalmaßstäben, also die meist vorgesehenen Ablesegitter können empfängerseitig angebracht werden. Damit hat die Abtasteinheit im Ablesebereich einen einfachen Aufbau, der dem Prinzip nach gleichbleibt, ob und welcher Inkrementalmaßstab oder codierte Maßstab abgetastet wird. Gleiches gilt für die Beleuchtungseinrichtung. Die Ablesehilfen und Empfänger können in eine Auswertungsschaltung integriert, beispielsweise baulich mit einer Signalauswerte- oder Anzeigeeinheit zusammengefaßt werden. Nach einer Variante kann man die bei der Abtastung des Inkrementalmaßstabes angestrebten, der Inkrementalteilung zugeordneten Helligkeitsschwankungen dadurch erzeugen, daß der Maßstab über entsprechende Gitter, die gegeneinander um Teilungsbruchteile versetzt sind, beleuchtet wird. Die Gitter werden dabei auf die Beleuchtungseinrichtung folgend angeordnet. Die Beleuchtung erfolgt über das zum Maßstab weisende Ende der gerichteten Fiberoptik. Dabei ist eine Beleuchtung im Durchlicht-, Auflicht- oder Reflexionsverfahren möglich.

Bei codierten Maßstäben kann man zur eindeutigen Zuordnung des Ablesebereiches eine Ablesekante optisch erzeugen bzw. nur ein an einer scharfen Ablesekante endendes Feld beleuchten.

Ein neues Meß- und Auswerteverfahren wird durch die Ausführung nach Anspruch 2 möglich, nach der sowohl die Beleuchtung als auch die Ablesung des Maßstabes durch Gitter hindurch erfolgt. Sieht man gleiche Gitter für die Beleuchtung und den Empfang vor, dann würde eine Signalverzerrung im empfangenen Signal bei untereinander gleich gerichteten Gittern für Beleuchtung und Empfang eine Verkantung der Abtasteinheit gegenüber dem Maßstab signalisieren. Man könnte auch bewußt das beleuchtete Gitter gegenüber dem empfangenden Gitter um Teilungsbruchteile versetzen, um so einen besonderen, charakteristischen Verlauf der empfangenen Signale zu erzeugen, der bei Interpolationsberechnungen vorteilhaft sein kann und insbesondere genauer als bisher eine Definition der Ableselinie gestattet. Wenn beleuchtetes und empfangendes Gitter in der Maßstabteilung gehalten und um ein Viertel der Maßstabteilung versetzt sind, hat das bei der Verstellung empfangene Signal die doppelte Frequenz des bei Gleichlicht mit dem gleichen empfängerseitigen Gitter aufgenommenen Signales.

Bei Inkrementalsystemen können in das System ebenfalls über Faseroptiken Beleuchtungs- und Abtasteinrichtungen für am Maßstab angebrachte Referenzmarken integriert sein.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigt

Fig. 1    ein erfindungsgemäßen inkrementales Linearmeßsystem im Schema und

Fig. 2    eine Draufsicht auf den Maßstab, wobei über dem stark vergrößert gezeichneten Maßstab eine Ableseeinrichtung und neben dem Maßstab eine Beleuchtungseinrichtung angedeutet wurden.

Bei einem linearen Inkrementalmeßsystem ist ein aus einem Glasstab 1 bestehender Maßstab vorgesehen, der in einer breiten Mittelspur eine inkrementale Meßteilung 2 und in einer Randspur eine oder mehrere Referenzmarken 3 trägt.

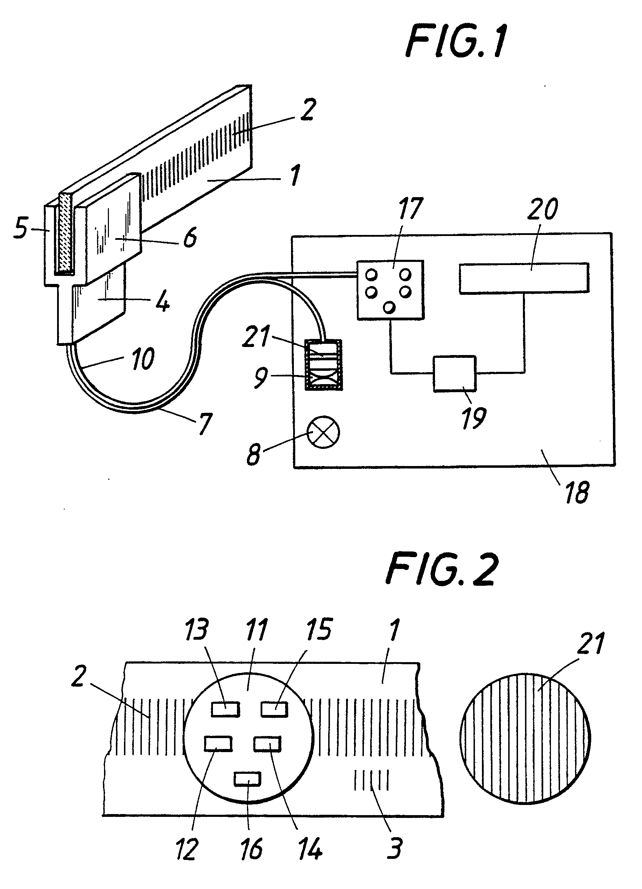

Entlang des Maßstabes 1 ist eine Ableseeinrichtung 4 geführt, die beispielsweise ein abgedichtet zwischen Dichtlippen in ein rohrförmiges, den Maßstab 1 aufnehmendes Gehäuse hineinragendes Schwert besitzt und an der Vorder- und Rückseite des Maßstabes 1 Halter 5, 6 trägt, die je ein Ende einer für eine Bildübertragung geeigneten, gerichteten Faseroptik 7 bzw. 10 aufnehmen. Die Faseroptik 7, die zum Halter 5 führt, schließt an eine Beleuchtungseinrichtung mit einer Lampe 8 an, der ein Kondensor 9 nachgeordnet ist. Der Maßstab 1 wird durch die im Halter 5 angeordnete Faseroptik von hinten beleuchtet. Die im Halter 6 angeordnete Faseroptik 10 führt aus der Abtasteinrichtung 4 heraus und überträgt das von ihr aufgenommene Bild auf eine Abtastplatte 11 (Fig. 2) am freien Ende dieser Faseroptik. Auf dieser Abtastplatte sind gegeneinander um ein Viertel der Maßstabteilung versetzt, Abtastgitter 12, 13, 14, 15 für die Meßteilung 2 und ein Abtastgitter 16 für die Referenzmarke bzw. Marken 3 angebracht. Die Abtastplatte sitzt, wie erwähnt, am Ende der Faseroptik 10. Jedem Gitter 12 bis 16 ist dort ein optoelektronischer Empfänger 17 auf einer Platine 18 nachgeordnet, wobei die Platine 18 auch eine Auswerteeinheit 19 für diese Signale mit nachgeordneten Zähl- und Anzeigeeinrichtungen 20 aufnimmt. Es können in bekannter Weise Richtungserkennungsstufen zur Bestimmung der Verstellrichtung und damit der Zählrichtung vorgesehen sein. Die Faseroptik 10 überträgt jeweils das Bild der momentan abgetasteten Maßstabstelle zur Auswertungseinheit. Die Gitter 12 bis 16 bestimen den in die elektrischen Signale umzuwandelnden Hell-Dunkelverlauf der Abtastsignale. Man könnte auch die Beleuchtung über Gitter vornehmen. Zu diesem Zweck kann in die Kondensoreinheit 9 eine Filterplatte 21 eingeschaltet sein, die mit der Abtastplatte 11 spiegelbildlich identische Gitter enthält. Hier würde jeder Maßstabbereich bzw. die Referenzmarke beim Durchgang durch ein bestimmtes Gitter beleuchtet und durch ein identisches Gitter 12 bis 16 abgelesen. Eine andere Möglichkeit besteht, wie in Fig. 2 angedeutet wurde, darin, eine Beleuctung des Maßstabes über eine Gitterplatte 21 und die Fiberoptik 7 durchzuführen, wobei die Gitterplatte 21 eine der Maßstabteilung entsprechende Teilung besitzt. Beleuchtung und Abtastung über die Fiberoptiken 7, 10 erfolgen selbstverständlich an genau gegenüberliegenden Teilen des Maßstabes. Die versetzte Zeichnung nach Fig. 2 soll nur die Darstellung ermöglichen.

In vielen Fällen wird es sich als vorteilhaft erweisen, die Größe der Maßstabinkremente, insbesondere ihre Breite, als ganzzahliges Vielfaches der Faserdurchmesser der Faseroptiken 7, 10 zu wählen. Die Abtastplatte 11 und die Gitterplatte 21 können unmittelbar auf das Ende eines entsprechenden runden Lichtleiterkabels 7, 10 aufgesetzt werden.

## Ansprüche

1. Meßsystem für die Messung von Längen oder Winkeln auf optoelektronischem Wege, mit einer relativ zu einem Maßstab (1) verstellbaren Abtasteinheit (4), die eine von wenigstens einer Lichtquelle (8) ausgehende Fiberoptik (7) zur Beleuchtung einer Ableseeinheit (11) über die Maßstabteilung (2) enthält, mit Abstand vom Maßstab (1) angeordnete und der Ableseinheit (11) nachgeordnete optoelektronische Empfänger (17) zur Umwandlung der optischen Ablesesignale in elektrische Signale ebenfalls über eine Fiberoptik (10) mit der Abtasteinheit (4) verbunden sind, dadurch gekennzeichnet, daß wenigstens die die optoelektronischen Empfänger (17) mit der Abtasteinheit (4) verbindende Fiberoptik (10) als für eine Bildübertragung geeignete, gerichtete Fiberoptik ausgebildet ist, die am einen, maßstabseitigen Ende einen zum Maßstab (1, 2) gerichteten Aufnahmebereich aufweist, und daß Abtastgitter der Ableseeinheit (11), insbesondere gegeneinander um Teilungsbruchteile versetzte Abtastgitter (12, 13, 14, 15), am anderen Ende der Fiberoptik (10) den optoelektronischen Empfängern (17) vorgeordnet angebracht sind.

2. Meßsystem nach Anspruch 1, dadurch gekennzeichnet, daß die Lichtquelle (8) so angeordnet ist, daß sie den Maßstab (1, 2) durch Gitter (21), deren Teilung der Teilung des als Inkrementalmaßstab ausgebildeten Maßstabes entspricht, und durch die diesen Gittern nachgeordnete Fiberoptik (7) beleuchtet, welche Fiberoptik ebenfalls als für die Bildübertragung geeignete, gerichtete Fiberoptik (7) ausgebildet ist.

## Claims

1. A measuring system for measuring lengths or angles opto-electronically, comprising a scanning unit (4) movable relatively to a scale (1) and containing a fibre optics system (7) extending from at least one light source (8) for illuminating a reading unit (11) above the scale graduations (2), while opto-electronic receivers (17) for converting the optical reading signals into electrical signals are disposed at a distance from the scale (1) and downstream of the reading unit (11) and are also connected via a fibre optics system (10) to the scanning unit (4), characterised in that at least the fibre optics system (10) connecting the opto-electronic receivers (17) to the scanning unit (4) is constructed as a directional fibre optics system suitable for image transmission and having at one end adjacent the scale a pickup-zone directed towards the scale (1, 2), and in that scanning gratings of the reading unit (11), more particularly scanning gratings (12, 13, 14, 15) which are offset from one another by fractions of a graduation, are provided at the other end of the fibre optics system (10) upstream of the opto-electronic receivers (17).

2. A measuring system according to claim 1, characterised in that the light source (8) is so disposed that it illuminates the scale (1, 2) through gratings (21) whose graduation corresponds to the graduation of the scale, which latter is in the form of an incremental scale, and through the fibre optics system (7) downstream of said gratings, which fibre optics system is also constructed as a directional fibre optics system (7) suitable for image transmission.

**Revendications**

1. Système de mesure pour la mesure des longueurs ou des angles par des moyens opto-électroniques, comprenant une unité (4) d'exploration, qui peut se déplacer par rapport à une règle graduée (1), et qui renferme une optique fibreuse (7) partant d'au moins une source lumineuse (8), et destinée à éclairer une unité de lecture (11) par l'intermédiaire de la division (2) de la règle graduée, et dans lequel des récepteurs opto-électroniques (17), disposés à distance de la règle graduée (1), en aval de l'unité de lecture (11), et destinés à convertir les signaux optiques de lecture en signaux électriques, sont eux aussi reliés à l'unité (4) d'exploration par l'intermédiaire d'une optique fibreuse (10), caractérisé en ce qu'au moins l'optique fibreuse (10), qui relie les récepteurs opto-électroniques (17) à l'unité (4) d'exploration, est constituée par une optique fibreuse en faisceau capable de transmettre des images, qui présente, à une extrémité côté règle graduée, une zone de réception dirigée vers la règle graduée (1, 2), et en ce que des grilles d'exploration de l'unité de lecture (11), en particulier des grilles d'exploration (12, 13, 14, 15) décalées entre elles de fractions du pas de division, sont prévues à l'autre extrémité de l'optique fibreuse (10), en amont des récepteurs opto-électroniques (17).

2. Système de mesure selon la revendication 1, caractérisé en ce que la source lumineuse (8) est agencée de manière à éclairer la règle graduée (1, 2) à travers des grilles (21) dont le pas de division correspond au pas de division de la règle graduée constituée par une règle graduée incrémentale, et aussi à travers l'optique fibreuse (7) placée en aval de ces grilles, ladite optique fibreuse étant également constituée par une optique fibreuse (7) en faisceau, appropriée pour la transmission des images.

## FIG.1

## FIG.2